# EUROPÄISCHE PATENTSCHRIFT

(11) **EP 2 818 282 B1**
(45) Veröffentlichungstag und Bekanntmachung des Hinweises auf die Patenterteilung: **03.08.2016**
(21) Anmeldenummer: 14172774.3
(22) Anmeldetag: 17.06.2014
(51) Int. Cl.: B25H 1/00

(54) **Kernbohrgerät mit einer Kernbohrständeraufnahme und einem Kernbohrständer**
Core drilling device with a core drilling stand holder and a core drilling stand
Appareil de carottage avec un support de carotteuse et une carotteuse

(30) Priorität: 26.06.2013 DE 202013102777 U; 21.10.2013 DE 202013104719 U
(43) Veröffentlichungstag der Anmeldung: 31.12.2014
(73) Patentinhaber: Gölz GmbH, 53940 Hellenthal-Blumenthal (DE)
(72) Erfinder: Schulte, Herbert, 53879 Euskirchen (DE)
(74) Vertreter: Wagner, Matthias

(56) Entgegenhaltungen:
- WO-A1-2008/026971
- WO-A1-2009/051522
- WO-A1-2009/058156
- DE-A1- 4 217 860

## Beschreibung

### Stand der Technik

Kernbohrständeraufnahmen, Kernbohrständer und Kernbohrgeräte sind aus dem Stand der Technik bekannt. Kernbohrgeräte werden verwendet, um Bohrlöcher in feste Untergründe, wie z.B. Beton, zu bohren. Kernbohrständer und Kernbohrständeraufnahmen dienen dabei der Befestigung des Kernbohrgerätes am Untergrund. Die Befestigung erfolgt herkömmlicherweise über Dübel und Spannbolzen hinter der Führungssäule, der Abstand zur Bohrachse ist groß und daraus resultierend sind die Dübelauszugskräfte hoch. Eine solche Befestigung ist zum Beispiel aus der Druckschrift EP 0 894 579 B1 bekannt.

Aus der Druckschrift DE 101 48 809 A1 bzw. EP 1 300 217 B1 ist ein Bohrständer für ein Werkzeuggerät mit einer fixierbaren Fußplatte und einem die Fußplatte normal durchbrechenden Durchgangsloch zur Durchführung eines Spannbolzens mit zumindest einer axial wirksamen Anschlagschulter bekannt. Dem Durchgangsloch ist zumindest ein Rastmittel mit einer axial wirksamen Gegenschulter zur axial formschlüssigen Arretierung der Anschlagschulter des Spannbolzens und zumindest ein händisch bedienbarer Exzenter zur axialen Verspannung des über das Rastmittel arretierten Spannbolzens zugeordnet. Dieses setzt die Parallelität der Anlagenflächen bzw. einen rechten Winkel der Achse vom Spannbolzen zur Anschlagschulter voraus. Ein Ausgleich von Unebenheiten ist bei dieser Befestigung nachteiliger Weise nicht möglich. Zur Lösung der Verbindung ist ein Öffnungskeil erforderlich, der eine radiale Öffnung der Rastbacken bewirkt. Zwischen dem Durchgangsloch der Fußplatte und der Achse des das Kernbohrgerät tragenden Schlittenführungssäule ist ein verhältnismäßig großer Abstand vorhanden, der entsprechende Hebelkräfte auf den Spannbolzen ausübt, so dass hohe Anforderungen an die Verankerung des Spannbolzens gestellt werden.

Ein Kernbohrgerät ist in WO 2009/051522 A1 offenbart.

Es ist die Aufgabe der vorliegenden Erfindung, die Nachteile des Standes der Technik zu beseitigen und ein Kernbohrgerät zur Verfügung zu stellen, das die Nachteile des Standes der Technik nicht aufweisen und insbesondere ein einfaches Befestigen und Lösen unterhalb der Führungssäule des Kernbohrständers in unterschiedlichen Untergründen mit geringstem Abstand zur Bohrachse ermöglichen und die Dübelauszugskräfte auf einen Minimalwert reduzieren.

### Offenbarung der Erfindung

Diese Aufgabe wird mit dem Kernbohrgerät gemäß dem Anspruch 1 gelöst. Es erlaubt ein einfaches Befestigen und Lösen des Kernbohrständers am Untergrund.

Die Befestigung der Kernbohrständeraufnahme im Untergrund kann grundsätzlich beliebig ausgebildet sein. So kann z.B. die Kernbohrständeraufnahme an einer Ankerstange befestigt werden. Die Kernbohrständeraufnahme selbst kann aber auch eine integrierte Ankerstange aufweisen, mit der die Kernbohrständeraufnahme z.B. an einem Dübel im Befestigungsloch befestigt werden kann. Der Kopf kann grundsätzlich beliebig ausgebildet sein. Entscheidend ist, dass die Bohrständeraufnähme mit geringstem Abstand zur Bohrachse befestigt werden kann und dadurch die Dübelauszugskräfte auf einen Minimalwert reduziert sind. Der Kopf ist stabil und fest von den Klemmbacken einklemmbar. Vorteilhaft entsteht durch das Einklemmen eine besonders stabile und formschlüssige Verbindung zwischen den Klemmbacken und dem Kopf.

Gemäß einer beispielhaften Ausführungsform der vorliegenden Erfindung ist vorgesehen, dass der Kopf rotationssymmetrisch ausgebildet ist. Dieses hat den Vorteil, dass der Kopf bzw. die Kernbohrständeraufnahme vergleichsweise einfach herstellbar ist. Außerdem hat dies den Vorteil, dass die entsprechenden Klemmbacken ebenfalls vergleichsweise einfach herstellbar sind. Der Kopf kann rotationssymmetrisch zu einer Symmetrieachse ausgebildet sein, es kann aber auch vorgesehen sein, dass der Kopf rotationssymmetrisch zu zwei oder mehreren Symmetrieachsen ausgebildet ist.

Der Kopf kann eine an seinem Außenumfang verlaufende Kopfnut aufweisen. Diese Kopfnut kann grundsätzlich jede beliebige Form aufweisen. Gemäß einer beispielhaften Ausführungsform ist die Kopfnut derart ausgebildet, dass die Kopfnut einen halbkreisförmigen Querschnitt aufweist.

Gemäß einer anderen beispielhaften Ausführungsform ist vorgesehen, dass die Kernbohrständeraufnahme einen Hinterschnitt aufweist, der unter, d.h. in Richtung Untergrund, dem Kopf angeordnet ist. Dadurch ist es vorteilhaft möglich, dass die Klemmbacken den Kopf an diesem Hinterschnitt umfassen.

Gemäß einer anderen beispielhaften Ausführungsform ist vorgesehen, dass die Kernbohrständeraufnahme eine zentrale Längsbohrung, die auch langlochförmig ausgebildet sein kann, aufweist. Mittels dieser zentralen Längsbohrung kann die Kernbohrständeraufnahme z.B. an einem Befestigungsanker mit minimierter Hebelwirkung befestigt werden.

Ist die Längsbohrung langlochförmig, so besteht die Möglichkeit der Verstellung der Kernbohrständeraufnahme (zum Beispiel zum Ausrichten der Bohrkrone zur gewünschten Bohrachse).

Gemäß einer weiteren beispielhaften Ausführungsform ist der Kopf zylindrisch ausgebildet. Gemäß einer anderen beispielhaften Ausführungsform ist vorgesehen, dass der Kopf kugelförmig ausgebildet ist. Dieses hat den Vorteil, dass Unebenheiten auf dem Untergrund durch die Kernbohrständeraufnahme ausgeglichen werden können.

Erfindungsgemäß umfasst das Kernbohrgerät einen Kernbohrständer, aufweisend Klemmbacken, wobei der Kernbohrständer derart ausgebildet ist, dass die Klemmbacken den Kopf einer Kernbohrständeraufnahme nach einer der vorhergehenden Ausführungsformen einklemmen. Dadurch kann z.B. vorteilhaft auf die Verwendung von Befestigungsmuttern verzichtet werden. Die Verbindung ist vergleichsweise stabil und die Befestigung kann in Verlängerung der Längsachse der Schlittenführungssäule angebracht werden, wodurch die Hebelkräfte auf die Kernbohrständeraufnahme und deren Befestigungsanker auf ein Minimum reduziert werden. Außerdem ist ein vergleichsweise einfaches Lösen der Verbindung möglich.

Klemmbacken im Sinne dieser Erfindung sind separat ausgebildete und voneinander unabhängige Bauteile. Es können zwei, drei, vier oder mehr Klemmbacken vorgesehen sein. Es können mindestens zwei Klemmbacken bezüglich des Untergrunds beweglich sein. Es kann alternativ mindestens eine Klemmbacke bezüglich des Untergrunds feststehend bzw. fest sein und die andere Klemmbacke bzw. die anderen Klemmbacken relativ zur feststehenden Klemmbacke beweglich sein.

Es ist insbesondere vorteilhaft möglich, den Kopf in die eine Klemmbacke einzuführen und die andere Klemmbacke derart auf den Kopf und die eine Klemmbacke aufzubringen, dass die Klemmbacken den Kopf fest einklemmen.

Die Klemmbacken können grundsätzlich jede Form haben. Entscheidend ist, dass die Klemmbacken den Kopf der Kernbohrständeraufnahme auf geeignete Weise einklemmen (umfassen) können, so dass eine stabile formschlüssige Verbindung entsteht.

Es ist beispielhaft vorgesehen, dass in den Klemmbacken die Form des Kopfes ausgeformt ist. Dieses ist so zu verstehen, dass, wenn z.B. der Kopf als Kugel ausgebildet ist, dann befindet sich in jeder Klemmbacke eine halbkugelförmige Ausformung zur Aufnahme des Kopfes. Dieses gilt ebenso für andere Formen des Kopfes und dementsprechende Ausformungen in den Klemmbacken, die zum Beispiel einen axialen Ausgleich von Unebenheiten des Untergrunds zu lassen.

Gemäß einer anderen beispielhaften Ausführungsform ist vorgesehen, dass die Klemmbacken identisch ausgebildet sind. Dabei kommt es auf den Teil bzw. Bereich der Klemmbacken an, der zur Einklemmung des Kopfes Verwendung findet. Andere Teile der Klemmbacken, die z.B. zur Befestigung der Klemmbacken selbst dienen, müssen nicht identisch ausgebildet sein.

Gemäß einer anderen Ausführungsform ist vorgesehen, dass die Klemmbacken zylinderförmig ausgebildet sind. Dadurch ist es vorteilhaft möglich, mit den zylinderförmig ausgebildeten Klemmbacken in eine radial verlaufende Kopfnut im Kopf einzugreifen. Dadurch ist vorteilhaft eine besonders einfache Ausbildung der Klemmbacken möglich, wobei zugleich eine vergleichsweise stabile Verbindung hergestellt werden kann.

Zylinderförmigen Klemmbacken können auch um 90° zur Längsachse gedreht oder in einer/einem anderen beliebigen Lage/Winkel angeordnet sein, wodurch die Möglichkeit der Verstellung des Kernbohrständers zur Kernbohrständeraufnahme besteht (zum Beispiel zum Ausrichten der Bohrkrone zur gewünschten Bohrachse).

Gemäß einer anderen beispielhaften Ausführungsform ist vorgesehen, dass die Klemmbacken als Halbschalen ausgebildet sind. Diese Halbschalen können z.B. kugelförmig bzw. halbkugelförmig ausgebildet sein. Diese Halbschalen können aber auch quaderförmig ausgebildet sein.

Es kann vorgesehen sein, dass die mindestens eine bewegliche Klemmbacke parallel zum Untergrund beweglich ist. Dadurch ist es vorteilhaft möglich, die mindestens eine bewegliche Klemmbacke seitlich bzw. von der Seite auf die andere Klemmbacke und den Kopf aufzuschieben. Es kann auch vorgesehen sein, dass eine der Klemmbacken um einen Drehpunkt schwenkbar ist. Es können auch beide Klemmbacken um jeweils einen Drehpunkt schwenkbar sein.

Gemäß einer beispielhaften Ausführungsform der vorliegenden Erfindung ist vorgesehen, dass der Kernbohrständer einen Betätigungshebel zum Betätigen der beweglichen Klemmbacke aufweist, wobei die bewegliche Klemmbacke durch Betätigung des Betätigungshebels aus einer Öffnungsposition, in der der Kopf in die andere Klemmbacke eingeführt werden kann, in eine Klemmposition, in der der Kopf zwischen den Klemmbacken eingeklemmt ist, und umgekehrt beweglich ist. Durch den Betätigungshebel ist vorteilhaft eine besonders einfache Betätigung der beweglichen Klemmbacke möglich. Dadurch wird eine bessere Erreichbarkeit der beweglichen Klemmbacke erzielt.

In der Öffnungsposition ist die bewegliche Klemmbacke derart vom Kopf und der anderen Klemmbacke beabstandet, dass der Kopf zwischen die Klemmbacken eingeführt werden kann. Nach Einführung des Kopfes kann die bewegliche Klemmbacke auf die andere Klemmbacke und den Kopf hinzubewegt werden, so dass der Kopf zwischen den Klemmbacken eingeklemmt werden kann. Dieses erleichtert erheblich die Befestigung des Bohrständers am Untergrund.

Wenn der Kernbohrständer wieder vom Untergrund gelöst werden soll, muss über den Betätigungshebel die bewegliche Klemmbacke aus der Klemmposition in die Öffnungsposition bewegt werden, zum Beispiel durch Ziehen, so dass der Kopf aus den Klemmbacken herausgezogen werden kann. Dieses erleichtert erheblich das Lösen des Kernbohrständers vom Untergrund.

Optional ist beispielhaft vorgesehen, dass die bewegliche Klemmbacke in der Klemmposition verriegelbar ist. Dadurch kann vorteilhaft eine unbeabsichtigte Öffnung der Klemmbacken bzw. ein unbeabsichtigtes Lösen der Befestigung verhindert werden. Dadurch wird die Sicherheit im Betrieb des Kernbohrgerätes erheblich verbessert.

Erfindungsgemäß ist der Kernbohrständer derart ausgebildet ist, dass der Kopf der Kernbohrständeraufnahme in Verlängerung der Längsachse der Schlittenführungssäule von den Klemmbacken einklemmbar ist.

Dabei ist die Bohrständeraufnahme mit geringstem Abstand zur Bohrachse befestigt und die Dübelauszugskräfte auf einen Minimalwert reduziert. Dadurch ist vorteilhaft eine erhebliche Reduzierung der Belastung der Befestigung möglich. Denn die Hebel, an denen die Kräfte, die durch das Eigengewicht und/oder durch die dynamische Belastung entstehen, angreifen, können dadurch erheblich verringert werden. Dadurch verbessern sich die Stabilität der Befestigung und auch die Haltbarkeit der Befestigung. Die Sicherheit wird erhöht.

Ausführungsbeispiele der vorliegenden Erfindung sind in den Zeichnungen dargestellt und in der nachfolgenden Beschreibung näher erläutert.

### Kurze Beschreibung der Zeichnungen

Figuren 1 a und 1 b zeigen schematisch eine beispielhafte Ausführungsform eines erfindungsgemäßen Kernbohrgerätes,
Figuren 2a, 2b zeigen schematisch eine beispielhafte Ausführungsform einer erfindungsgemäßen Kernbohrständeraufnahme,
Figur 2c zeigt schematisch eine weitere beispielhafte Ausführungsform der erfindungsgemäßen Kernbohrständeraufnahme,
Figuren 3a, 3b zeigen schematisch eine weitere beispielhafte Ausführungsform der erfindungsgemäßen Kernbohrständeraufnahme,
Figur 4 zeigt schematisch eine weitere beispielhafte Ausführungsform der erfindungsgemäßen Kernbohrständeraufnahme,
Figur 5a zeigt schematisch eine Klemmbacke eines erfindungsgemäßen Kernbohrständers,
Figur 5b zeigt schematisch eine beispielhafte Ausführungsform eines erfindungsgemäßen Kernbohrständers,
Figur 6a zeigt schematisch ein weiteres Beispiel für eine Klemmbacke eines erfindungsgemäßen Kernbohrständers,
Figur 6b zeigt schematisch eine weitere Ausführungsform eines erfindungsgemäßen Kernbohrständers,
Figur 7a zeigt schematisch ein weiteres Ausführungsbeispiel für eine Klemmbacke, und Figur 7b zeigt schematisch eine weitere beispielhafte Ausführungsform des erfindungsgemäßen Kernbohrständers.

### Ausführungsformen der Erfindung

In den verschiedenen Figuren sind gleiche Teile stets mit den gleichen Bezugszeichen versehen und werden daher in der Regel jeweils nur einmal benannt bzw. erwähnt.

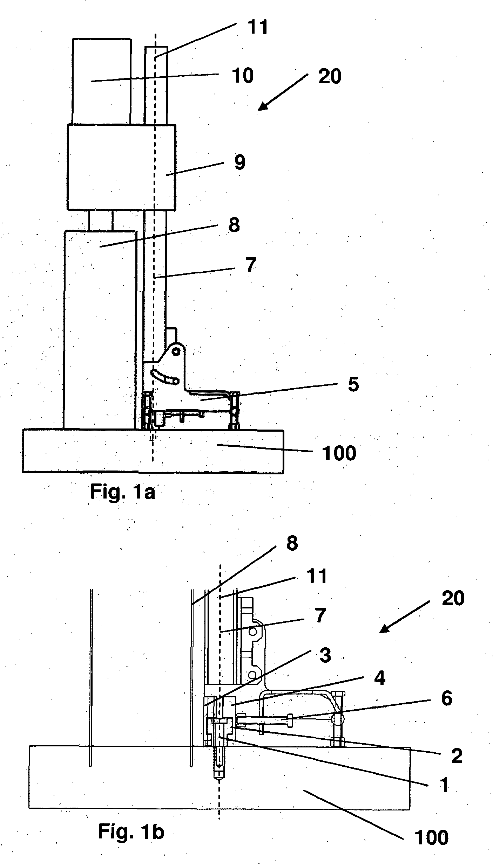

Figur 1 a zeigt schematisch eine beispielhafte Ausführungsform eines erfindungsgemäßen Kernbohrgeräts 20. Das Kernbohrgerät 20 weist herkömmlicherweise einen Bohrmotor 10 auf, einen Schlitten 9, eine Bohrkrone 8, eine Schlittenführungssäule 7 und einen Kernbohrständer 5, der gemäß einer beispielhaften Ausführungsform der vorliegenden Erfindung ausgebildet ist. Die Funktionsweise eines solchen Kernbohrgeräts 20 ist aus dem Stand der Technik bekannt und wird hier nicht weiter vertiefend dargestellt. Die Schlittenführungssäule 7, die in herkömmlicher Weise den Schlitten 9 führt, weist eine Längsachse 11 auf. Das Kernbohrgerät 20 ist mit einem Untergrund 100 verbunden. Dieser Untergrund ist zum Beispiel Beton.

Figur 1b zeigt eine detaillierte Ansicht des unteren Bereichs des Kernbohrgeräts 20 aus Figur 1 a. Eine Kernbohrständeraufnahme 1 aufweisend einen Kopf 2 ist von Klemmbacken 3, 4 des Kernbohrständers 5 eingeklemmt, wobei die Klemmbacke 3 feststehend ist und die Klemmbacke 4 relativ zur feststehenden Klemmbacke 3 bewegliche ist. Die Befestigung der Kernbohrständeraufnahme 1 im Untergrund 100 ist mit herkömmlichen Mitteln zum Beispiel durch einen Dübel und einen Befestigungsanker möglich. Vorteilhaft ist der Kopf 2 der Kernbohrständeraufnahme 1 in Verlängerung der Längsachse 11 der Schlittenführungssäule 7 von den Klemmbacken 3, 4 eingeklemmt. Dadurch sind die Belastungen, die durch das Eigengewicht des Kernbohrgerätes 20 und/oder durch die dynamische Belastung auf die Kernbohrständeraufnahme 1 wirken, erheblich verringerbar. Die Befestigung im Untergrund 100 ist dadurch stabiler und haltbarer.

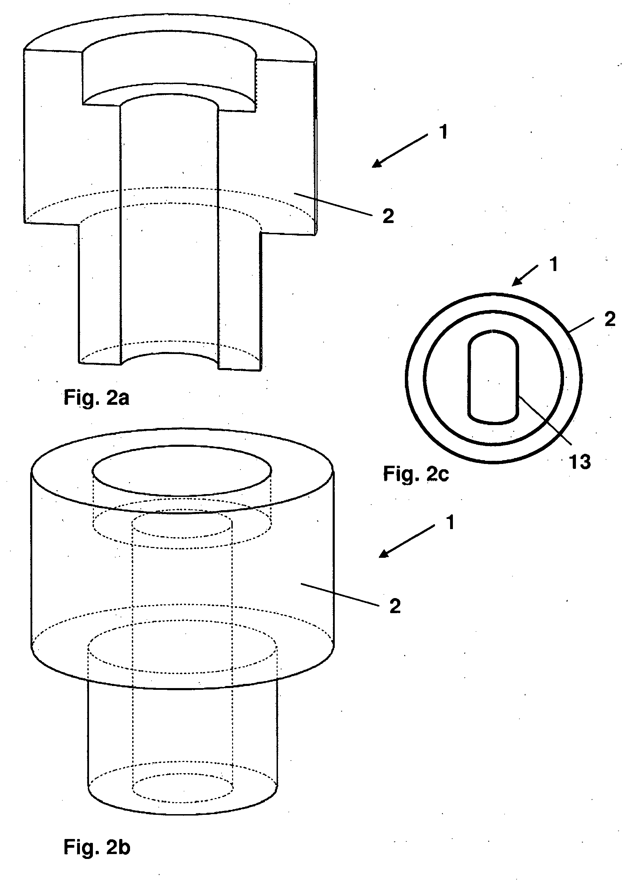

Figur 2a zeigt schematisch eine Kernbohrständeraufnahme 1 in einer Schnittansicht gemäß einer beispielhaften Ausführungsform der vorliegenden Erfindung. Die Kernbohrständeraufnahme 1 weist einen zylinderförmigen Kopf 2 auf. Im unteren Bereich des Kopfes 2 befindet sich ein Hinterschnitt, der parallel zum Untergrund 100 verläuft, sodass der Kopf 2 besonders fest von den Klemmbacken 3, 4 eingeklemmt werden kann. Die Kernbohrständeraufnahme 1 weist eine in Längsrichtung durchgehende Bohrung auf. Diese Bohrung dient vorteilhaft der Befestigung der Kernbohrständeraufnahme 1 zum Beispiel an einem Befestigungsanker, der im Untergrund 100 befestigt ist. Die Bohrung könnte zum Beispiel auch langlochförmig ausgebildet sein.

Figur 2b zeigt die Kernbohrständeraufnahme 1 aus Figur 2a in einer Vollansicht, wobei die verdeckten Kanten innerhalb der Kernbohrständeraufnahme 1 mit gestrichelten Linien angedeutet sind. Im Übrigen wird auf die Ausführungen zu Figur 2a verwiesen.

Figur 2c zeigt die Kernbohrständeraufnahme 1 in einer Draufsicht, wobei der Kopf 2 eine als Langloch 13 ausgebildete Bohrung aufweist. Im Übrigen wird auf die Ausführungen zu Figur 2a und 2b verwiesen.

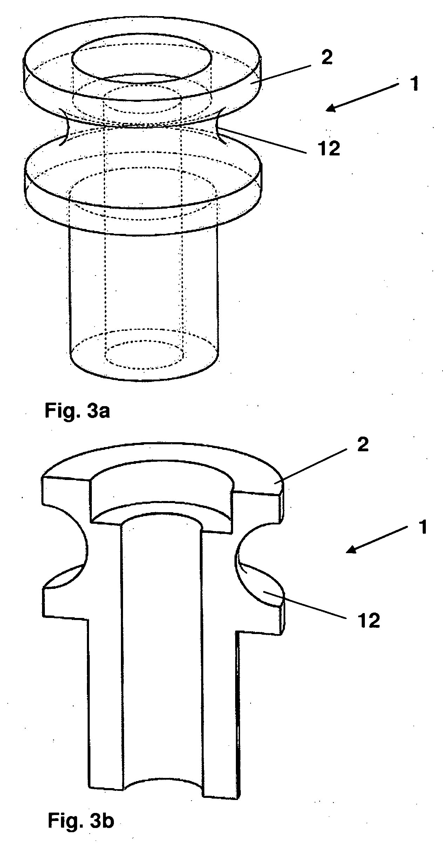

Figuren 3a und 3b zeigen schematisch eine Kernbohrständeraufnahme 1 gemäß einer weiteren beispielhaften Ausführungsform der vorliegenden Erfindung. Figur 3a zeigt die Kernbohrständeraufnahme 1 in einer Vollansicht, wobei die verdeckten Kanten gestrichelt dargestellt sind. Figur 3b zeigt die Kernbohrständeraufnahme 1 aus Figur 3a in einer Schnittansicht. Die Kernbohrständeraufnahme 1 weist den Kopf 2 auf. Der Kopf 2 weist eine Kopfnut 12 auf. Die Kopfnut 12 verläuft im Querschnitt halbkreisförmig. Die Kopfnut 12 verläuft in radialer Richtung über 360° entlang des Außenumfangs des Kopfes 2. Die Kernbohrständeraufnahme 1 weist eine in Längsrichtung zentrale Durchgangsbohrung auf, mit der die Kernbohrständeraufnahme 1 an einem Befestigungsanker befestigt werden kann.

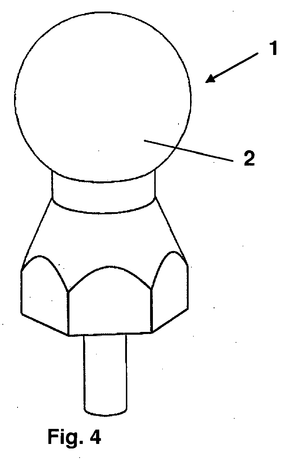

Figur 4 zeigt eine Kernbohrständeraufnahme 1 gemäß einer weiteren beispielhaften Ausführungsform der vorliegenden Erfindung. In dieser Ausführungsform ist der Kopf 2 kugelförmig ausgebildet. Diese Ausführungsform ermöglicht eine besonders gute Ausgleichung von Unebenheiten auf dem Untergrund 100. In dieser Ausführungsform weist die Kernbohrständeraufnahme 1 im unteren Bereich einen Zapfen bzw. eine integrierte Ankerstange auf, mit dem die Kernbohrständeraufnahme 1 zum Beispiel in einem Dübel in einem Befestigungsloch, oder einem Durchgangsloch mit Gegenmutter, im Untergrund 100 befestigt werden kann. Zur Befestigung der Kernbohrständeraufnahme 1 weist die Kernbohrständeraufnahme 1 radial angeordnete Anlageflächen, zum Beispiel für Werkzeug, auf. Im Übrigen wird auf die Ausführungen zu den vorherigen Ausführungsbeispielen verwiesen.

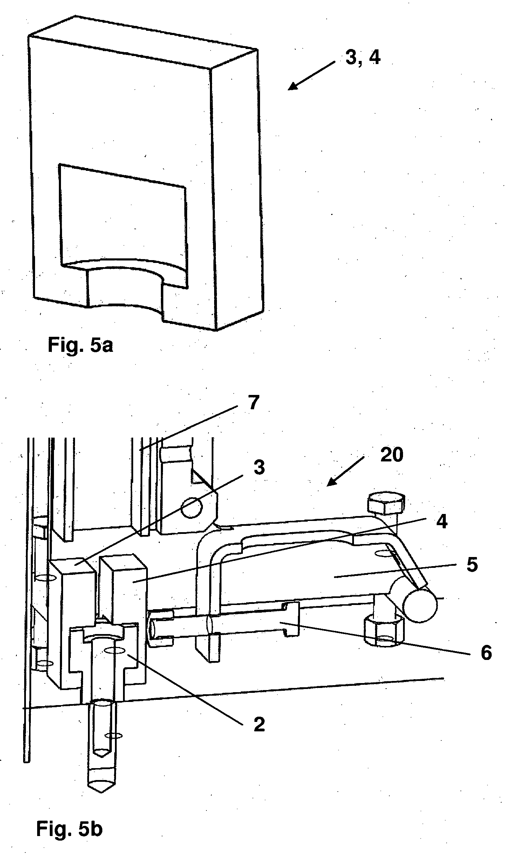

Figur 5a zeigt schematisch eine Klemmbacke 3, 4 gemäß einer beispielhaften Ausführungsform. Die Klemmbacke 3, 4 ist im Wesentlichen quaderförmig ausgebildet. Die Klemmbacke 3, 4 weist eine Ausformung in Form einer Halbschale auf, in der der Kopf 2 aufgenommen werden kann. Diese Ausformung ist in dieser Ausführungsform halbzylinderförmig ausgebildet.

Figur 5b zeigt eine Detailansicht des Kernbohrgerätes 20 gemäß einer weiteren beispielhaften Ausführungsform. Das Kernbohrgerät 20 weist die Klemmbacken 3, 4 auf, die wie in Figur 5a dargestellt ausgebildet sind. Zwischen den Klemmbacken 3, 4 ist der zylinderförmig ausgebildete Kopf 2 der Kernbohrständeraufnahme 1 eingeklemmt. Die linke Klemmbacke 3 ist feststehend ausgebildet. Die rechte Klemmbacke 4 ist beweglich ausgebildet. Die bewegliche Klemmbacke 4 kann über den Betätigungshebel 6 bewegt werden. Die Klemmbacke 4 kann parallel zum Untergrund 100 bewegt werden. Der Betätigungshebel 6 wird zur Öffnung nach rechts, das heißt parallel zum Untergrund 100, gezogen. Zur Befestigung des Kopfes 2 wird der Betätigungshebel 6 nach links, das heißt auf die feststehende Klemmbacke 3 zugeschoben. Dieses geschieht ebenfalls über den Betätigungshebel 6.

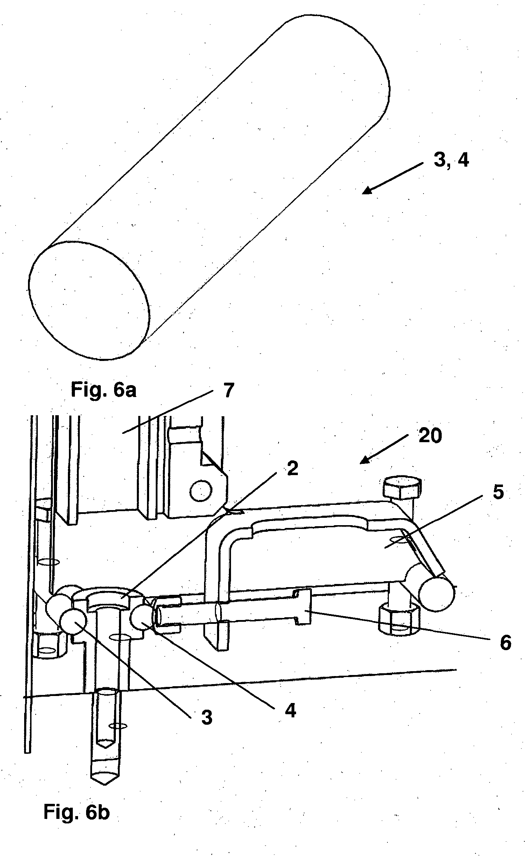

Figur 6a zeigt eine weitere beispielhafte Klemmbacke 3, 4. Die Klemmbacke 3, 4 ist als Vollzylinder ausgebildet. Figur 6b zeigt eine detaillierte Ansicht des unteren Bereichs des Kernbaugerätes 20 gemäß einer weiteren beispielhaften Ausführungsform. Der Kopf 2 weist eine im Querschnitt halbkreisförmige Kopfnut 12 auf, in die die zylindrisch ausgebildeten Klemmbacken 3, 4 eingreifen können, so dass der Kopf 2 von den Klemmbacken 3, 4 eingeklemmt werden kann. Im Übrigen wird auf die Ausführungen zur Figur 5b verwiesen.

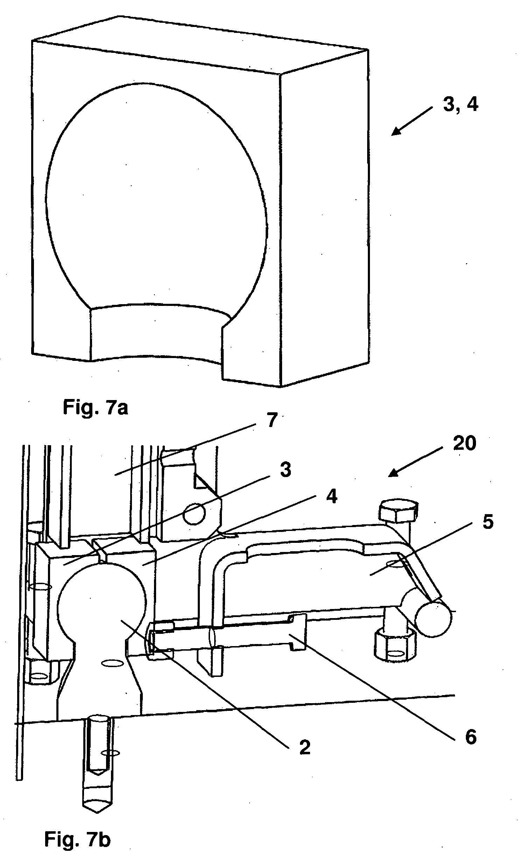

Figur 7a zeigt ein weiteres Beispiel für die Klemmbacken 3, 4. Die Klemmbacken 3, 4 weisen eine halbkugelförmige Ausformung auf. Figur 7b zeigt schematisch detailliert den unteren Bereich des Kernbaugerätes 20 gemäß einer weiteren beispielhaften Ausführungsform. Der als Kugel ausgebildete Kopf 2 wird von den Klemmbacken 3, 4, die in Figur 7a dargestellt sind, festgeklemmt. In dieser Ausführungsform ist eine besonders gute Ausgleichung von Unebenheiten des Untergrunds möglich. Im Übrigen wird auf die Ausführungen zu Figur 5b und Figur 6b verwiesen.

### Bezugszeichenliste

- 1: Kernbohrständeraufnahme
- 2: Kopf
- 3: Klemmbacke
- 4: Klemmbacke
- 5: Kernbohrständer
- 6: Betätigungshebel
- 7: Schlittenführungssäule
- 8: Bohrkrone
- 9: Schlitten
- 10: Bohrmotor
- 11: Längsachse
- 12: Kopfnut
- 13: Langloch
- 20: Kernbohrgerät
- 100: Untergrund

## Patentansprüche

1. Kernbohrgerät (20) zum Bohren von Bohrlöchern in einen Untergrund (100), umfassend einen Kernbohrständer (5) mit einer Schlittenführungssäule (7), die einen Schlitten (9) führt, sowie eine Kernbohrständeraufnahme (1), wobei die Kernbohrständeraufnahme (1) einen Kopf (2) aufweist und wobei der Kernbohrständer (5) Klemmbacken (3, 4) aufweist, **dadurch gekennzeichnet, dass** die Kernbohrständeraufnahme (1) in dem Untergrund (100) befestigbar ist und dass der Kopf (2) der Kernbohrständeraufnahme (1) in Verlängerung der Längsachse (11) der Schlittenführungssäule (7) zwischen den Klemmbacken (3, 4) einklemmbar ist.

2. Kernbohrgerät (20) nach Anspruch 1, **dadurch gekennzeichnet, dass** der Kopf (2) rotationssymmetrisch ausgebildet ist.

3. Kernbohrgerät (20) nach Anspruch 1 oder 2, **dadurch gekennzeichnet, dass** der Kopf (2) zylindrisch ausgebildet ist.

4. Kernbohrgerät (20) nach Anspruch 1 oder 2, **dadurch gekennzeichnet, dass** der Kopf (2) kugelförmig ausgebildet ist.

5. Kernbohrgerät (20) nach einem der vorangehenden Ansprüche, **dadurch gekennzeichnet, dass** der Kopf (2) eine an seinem Außenumfang verlaufende Kopfnut (12) aufweist.

6. Kernbohrgerät (20) nach Anspruch 1, **dadurch gekennzeichnet, dass** der Kopf (2) gewindeförmig ausgebildet ist.

7. Kernbohrgerät (20) nach einem der vorangehenden Ansprüche, **dadurch gekennzeichnet, dass** am Kopf (2) eine Ankerstange integriert ist.

8. Kernbohrgerät (20) nach einem der vorangehenden Ansprüche, **dadurch gekennzeichnet, dass** die Klemmbacken (3, 4) identisch ausgebildet sind.

9. Kernbohrgerät (20) nach einem der vorangehenden Ansprüche, **dadurch gekennzeichnet, dass** in den Klemmbacken (3, 4) die Form des Kopfes (2) ausgeformt ist.

10. Kernbohrgerät (20) nach einem der vorangehenden Ansprüche, **dadurch gekennzeichnet, dass** die Klemmbacken (3, 4) als Halbschalen ausgebildet sind.

11. Kernbohrgerät (20) nach einem der Ansprüche 1 bis 9, **dadurch gekennzeichnet, dass** die Klemmbacken (3,4) kugelförmig ausgebildet sind und einen axialen Ausgleich von Unebenheiten des Untergrunds (100) zulassen.

12. Kernbohrgerät (20) nach einem der Ansprüche 1 bis 8, **dadurch gekennzeichnet, dass** die Klemmbacken (3, 4) zylinderförmig ausgebildet sind.

13. Kernbohrgerät (20) nach einem der vorangehenden Ansprüche, **dadurch gekennzeichnet, dass** mindestens eine der Klemmbacken (3, 4) parallel zum Untergrund (100) beweglich ist.

14. Kernbohrgerät (20) nach einem der vorangehenden Ansprüche, **dadurch gekennzeichnet, dass** mindestens eine der Klemmbacken (3, 4) in Klemmrichtung und/oder in Schließrichtung beweglich ist.

15. Kernbohrgerät (20) nach einem der vorangehenden Ansprüche, **dadurch gekennzeichnet, dass** der Kernbohrständer (5) mindestens einen Betätigungshebel (6) zum Betätigen mindestens einer der Klemmbacken (4) aufweist, wobei die mindestens eine Klemmbacke (4) durch Betätigung des Betätigungshebels (6) aus einer Öffnungsposition, in der der Kopf (2) zwischen die Klemmbacken (3, 4) eingeführt werden kann, in eine Klemmposition, in der der Kopf (2) zwischen den Klemmbacken (3, 4) eingeklemmt ist, und umgekehrt beweglich ist.

16. Kernbohrgerät (20) nach Anspruch 15, **dadurch gekennzeichnet, dass** die mindestens eine Klemmbacke (4) in der Klemmposition verriegelbar ist.

17. Kernbohrgerät (20) nach einem der vorangehenden Ansprüche, **dadurch gekennzeichnet, dass** die Kernbohrständeraufnahme (1) unter der Schlittenführungssäule (7) angeordnet ist.

## Claims

1. A core drilling device (20) for drilling bore holes into a ground (100), comprising a core drilling stand (5) with a carriage guiding column (7) guiding a carriage (9), and a core drilling stand holder (1), the core drilling stand holder (1) having a head (2) and the core drilling stand (5) having clamping jaws (3, 4), **characterized in that** the core drilling stand holder (1) can be fixed in the ground (100) and that the head (2) of the core drilling stand holder (1) can be clamped between the clamping jaws (3, 4) in extension of the longitudinal axis (11) of the carriage guiding column (7).

2. The core drilling device (20) according to claim 1, **characterized in that** the head (2) is configured to be rotationally symmetric.

3. The core drilling device (20) according to claim 1 or 2, **characterized in that** the head (2) is configured to be cylindrical.

4. The core drilling device (20) according to claim 1 or 2, **characterized in that** the head (2) is configured to be spherical.

5. The core drilling device (20) according to any one of the preceding claims, **characterized in that** the head (2) has a head groove (12) extending on its outer circumference.

6. The core drilling device (20) according to claim 1, **characterized in that** the head (2) is configured to be thread-shaped.

7. The core drilling device (20) according to any one of the preceding claims, **characterized in that** an anchoring rod is integrated at the head (2).

8. The core drilling device (20) according to any one of the preceding claims, **characterized in that** the clamping jaws (3, 4) are configured in an identical manner.

9. The core drilling device (20) according to any one of the preceding claims, **characterized in that** the shape of the head (2) is formed in the clamping jaws (3, 4).

10. The core drilling device (20) according to any one of the preceding claims, **characterized in that** the clamping jaws (3, 4) are configured as half-shells.

11. The core drilling device (20) according to any one of the claims 1 to 9, **characterized in that** the clamping jaws (3, 4) are configured to be spherical and permit an axial compensation of uneven portions of the ground (100).

12. The core drilling device (20) according to any one of the claims 1 to 8, **characterized in that** the clamping jaws (3, 4) are configured to be cylindrical.

13. The core drilling device (20) according to any one of the preceding claims, **characterized in that** at least one of the clamping jaws (3, 4) is movable parallel to the ground (100).

14. The core drilling device (20) according to any one of the preceding claims, **characterized in that** at least one of the clamping jaws (3, 4) is movable in the clamping direction and/or in the closing direction.

15. The core drilling device (20) according to any one of the preceding claims, **characterized in that** the core drilling stand (5) has at least one operating lever (6) for operating at least one of the clamping jaws (4), the at least one clamping jaw (4) being movable, by operating the operating lever (6), from an opening position, in which the head (2) can be inserted between the clamping jaws (3, 4), into a clamping position, in which the head (2) is clamped between the clamping jaws (3, 4), and vice versa.

16. The core drilling device (20) according to claim 15, **characterized in that** the at least one clamping jaw (4) can be locked in the clamping position.

17. The core drilling device (20) according to any one of the preceding claims, **characterized in that** the core drilling stand holder (1) is disposed underneath the carriage guiding column (7).

## Revendications

1. Appareil de carottage (20) pour forer des trous de forage dans un sous-sol (100), comprenant une carotteuse (5) avec une colonne de guidage de chariot (7), qui guide un chariot (9), ainsi qu'une cage de carotteuse (1), dans lequel la cage de carotteuse (1) présente une tête (2) et dans lequel la carotteuse (5) présente des mâchoires de serrage (3, 4), **caractérisé en ce que** la cage de carotteuse (1) peut être fixée dans le sous-sol (100) et la tête (2) de la cage de carotteuse (1) peut être serrée dans le prolongement de l'axe longitudinal (11) de la colonne de guidage de chariot (7) entre les mâchoires de serrage (3, 4).

2. Appareil de carottage (20) selon la revendication 1, **caractérisé en ce que** la tête (2) est conçue avec une symétrie de révolution.

3. Appareil de carottage (20) selon la revendication 1 ou 2, **caractérisé en ce que** la tête (2) est conçue en forme cylindrique.

4. Appareil de carottage (20) selon la revendication 1 ou 2, **caractérisé en ce que** la tête (2) est conçue en forme sphérique.

5. Appareil de carottage (20) selon l'une quelconque des revendications précédentes, **caractérisé en ce que** la tête (2) présente une encoche de tête (12) s'étendant sur sa périphérie externe.

6. Appareil de carottage (20) selon la revendication 1, **caractérisé en ce que** la tête (2) est conçue en forme filetée.

7. Appareil de carottage (20) selon l'une quelconque des revendications précédentes, **caractérisé en ce qu'**une tige d'ancrage est intégrée à la tête (2).

8. Appareil de carottage (20) selon l'une quelconque des revendications précédentes, **caractérisé en ce que** les mâchoires de serrage (3, 4) sont conçues identiques.

9. Appareil de carottage (20) selon l'une quelconque des revendications précédentes, **caractérisé en ce que** la forme de la tête (2) est reproduite dans les mâchoires de serrage (3, 4).

10. Appareil de carottage (20) selon l'une quelconque des revendications précédentes, **caractérisé en ce que** les mâchoires de serrage (3, 4) sont conformées en demi-coques.

11. Appareil de carottage (20) selon l'une quelconque des revendications 1 à 9, **caractérisé en ce que** les mâchoires de serrage (3, 4) se présentent sous forme sphérique et permettent une compensation axiale des inégalités du sous-sol (100).

12. Appareil de carottage (20) selon l'une quelconque des revendications 1 à 8, **caractérisé en ce que** les mâchoires de serrage (3, 4) se présentent sous forme cylindrique.

13. Appareil de carottage (20) selon l'une quelconque des revendications précédentes, **caractérisé en ce qu'**au moins l'une des mâchoires de serrage (3, 4) peut se déplacer parallèlement au sous-sol (100).

14. Appareil de carottage (20) selon l'une quelconque des revendications précédentes, **caractérisé en ce qu'**au moins l'une des mâchoires de serrage (3, 4) peut se déplacer dans le sens du serrage et/ou dans le sens de la fermeture.

15. Appareil de carottage (20) selon l'une quelconque des revendications précédentes, **caractérisé en ce que** la carotteuse (5) présente au moins un levier de commande (6) pour commander au moins l'une des mâchoires de serrage (4), dans lequel la au moins une mâchoire de serrage (4) peut être déplacée par commande du levier de commande (6) d'une position d'ouverture, dans laquelle la tête (2) peut être insérée entre les mâchoires de serrage (3, 4), dans une position de serrage, dans laquelle la tête (2) est serrée entre les mâchoires de serrage (3, 4) et vice versa.

16. Appareil de carottage (20) selon la revendication 15, **caractérisé en ce que** la au moins une mâchoire de serrage (4) peut être verrouillée en position de serrage.

17. Appareil de carottage (20) selon l'une quelconque des revendications précédentes, **caractérisé en ce que** la cage (1) de la carotteuse est agencée en dessous de la colonne de guidage de chariot (7).
